(19) Europäisches Patentamt / European Patent Office / Office européen des brevets

(11) **EP 2 381 604 A1**

(12) **EUROPEAN PATENT APPLICATION**
published in accordance with Art. 153(4) EPC

(43) Date of publication:
26.10.2011 Bulletin 2011/43

(21) Application number: 09834159.7

(22) Date of filing: 14.12.2009

(51) Int Cl.:
*H04J 13/04* (0000.00)     *H04J 11/00* (2006.01)
*H04B 1/707* (2011.01)

(86) International application number:
**PCT/ES2009/070581**

(87) International publication number:
**WO 2010/072872 (01.07.2010 Gazette 2010/26)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: 23.12.2008 ES 200803687

(71) Applicant: **Diaz Fuente, Vicente**
**28805 Alcala de Henares (ES)**

(72) Inventor: **Diaz Fuente, Vicente**
**28805 Alcala de Henares (ES)**

(74) Representative: **Lahidalga de Careaga, Jose Luis**
**C/Arturo Soria 243 - Dupl.**
**28033 Madrid (ES)**

(54) **METHOD AND APPARATUS FOR OBTAINING IMMUNITY TO THE PHASE DIFFERENCE AND THE DOPPLER EFFECT IN COMMUNICATION DETECTION SYSTEMS**

(57) A coding and decoding method and apparatus for reducing interferences in multi-user simultaneous signal transmission systems. This invention presents a coding and decoding method and apparatus which, when applied to any system which needs to transmit and receive a signal in a transmission medium, allow the effects owing to the phase differences between the transmitted and received signals to be eliminated and allow the Doppler effect caused by the speed difference between the different transmitters and receivers to be eliminated. This method allows said effects to be reduced by making it possible to design detection systems (RADAR, SONAR spectroscopy, NDT, etc.) with a greater spatial resolution than current systems and with less calculation power. Likewise, in systems which require the simultaneous communication of several orthogonal data flows independently of the phase wherein said flows are received, this method likewise makes it possible to cancel multi-access interference independently of the phase and Doppler effect with which they reach the receiver. Finally, this method makes it possible to transmit and receive the signal at the same time and therefore to cancel the blind time between measurements in systems which use pulse compression.

FIG. 1

EP 2 381 604 A1

## Description

## OBJECT OF THE INVENTION

The present invention whereto the present specification relates is a coding and decoding method and apparatus which, when applied to any system which needs to transmit and receive a signal in a transmission medium, allow the effects owing to the phase differences between the transmitted and received signals to be eliminated and allow the Doppler effect caused by the speed difference between the different transmitters and receivers to be eliminated. This method allows said effects to be reduced by making it possible to design detection systems (RADAR, SONAR spectroscopy, NDT, etc.) with a greater spatial resolution than current systems and with less calculation power.

Likewise, in systems which require the simultaneous communication of several orthogonal data flows independently of the phase wherein said flows are received (such as for example in the ascending path of mobile communications or multipoint-to-point, DSL applications, etc.), this method likewise makes it possible to cancel multi-access interference independently of the phase and Doppler effect with which they reach the receiver.

Finally, this method makes it possible to transmit and receive the signal at the same time and therefore to cancel the blind time between measurements in systems which use pulse compression.

## FIELD OF THE INVENTION

The present invention is applicable across a wide range of fields due to the broad spectrum of use of this technology. By way of non-limiting example, we can refer to its use in the field of communications. Likewise, this technology is of great use in the military and civil fields related to radar or sonar communications and, exemplifying the importance and versatility of this technology, it is also applicable to image-based medical diagnostic apparatuses such as ultrasound scanning, magnetic resonance scanning or computerised axial tomography, as well as to the measurement of non-intrusive physical and chemical magnitudes and spectral analysis, among others, as this technique offers the possibility of directly obtaining the transfer function of the transmission system.

## BACKGROUND OF THE INVENTION

Most current detection systems transmit a signal which, on being propagated through a medium and absorbed or reflected by the detected objects, undergoes modification of its parameters, in such a manner that the phase in which it is received, as well as frequency and amplitude, are modified by the displacement of the detected objects with respect to the receiver. It is evident that the signal received will also be formed by phase and frequency-displaced copies of the original signal with different amplitudes due to the effects of absorption and reflection on said objects.

Additionally, remote resolution is one of the most important factors in these types of systems, which is not only limited by the form of the signal transmitted but also by phase distortion and, particularly, the Doppler and Clutter effects.

Digital pulse compression is one of the most frequently used techniques to increase remote resolution as it allows the possibility of using binary sequences with ideal autocorrelation (maximal peak defined by low sidelobes). Barker sequences have been one of the most widely used resources for years, given their proven immunity to the Doppler effect. However, due to their smaller length (less than or equal to 13 bits) their application is limited to low-noise environments or high Doppler, where other techniques cannot be used. While the paper by J. Watkins et al. ["A Binary Sequence of Period 64 with Better Autocorrelation Properties Than Barker Sequence of Period 13", JPL, TDA Progress Report, April-June 1985] reveals the possibility of obtaining better characteristics than the Barker sequence, it is the only known case to date and sequences of longer length having said characteristics are not considered to exist.

Compression by means of frequency-modulated linear functions (LFM) or "chirps" and its variants is currently the most frequently used technique, as it has the advantage of optimising energy in the band used, thereby obtaining an ideal autocorrelation function [US 4,633,185; US 4,309,703]. On the contrary, its Doppler immunity is low and it has relatively high side-lobes, unless a relatively complex process such as "windowing" or filtering of the signal received is carried out.

Pulse compression by means of Golay sequences has already been addressed in numerous patents and publications, including several belonging to the author of the present patent. However, they all have the drawback of being very sensitive to variations in phase and frequency, due to which their use is limited in RADAR and SONAR applications with Doppler effect due to the generation of high side-lobes which must be compensated, as in the case of chirp signals [US 5,440,311; US 5,151,702; US 4,353,067]. However, one of the advantages of the complementary sequences is the possibility of finding combinations of codes with null crossed correlation, which facilitates the reduction in interferences between different detection systems, which has already been envisaged in [US 5,047, 784] or in application [PCT/ES2008/000734]. However, both techniques are sensitive to Clutter and Doppler effects and require compensation. One solution is the use of Doppler compensation filters as in patent [US 5,376,939], which complicate signal processing in excess.

Doppler compensation techniques are very varied and there are numerous related patents [US 7,439,906; US 5,414,428; US 3,945,010], although said patents are not related to the object of this patent, as the technique it presents does not require Doppler compensation, but rather is immune to said effect.

On the other hand, one of the main problems in communication systems is interference between users. The system based on code-division or CDMA is a system based on the low crossed correlation of different sequences used by different users. Due to the fact that said crossed correlation is not null, there is interference due to simultaneous access by several users called MAI (Multi-Access Interference) which prevents increasing the number of users above a limit related to said interference. Evidently, the movement of users within the cell with respect to themselves and to the base station causes phase and frequency distortion due to the Doppler effect, which at times cannot be corrected or reduces transmission speed. This is particularly harmful in multipoint-to-point systems (satellite links, mobile communications, etc.), where the different distances and speeds between users makes it difficult to synchronise and maintain low interference therebetween.

Likewise, in the user-to-base station link there is a phase difference between the different users, which causes an increase in interference

Additionally, communications between vehicles moving at high speeds (airplanes, trains, spacecraft, missiles, satellites, etc.) are extremely delicate as the spectral efficiency or data transmission speed declines rapidly at high speeds.

Likewise, the effect of sharing the same frequency band among subscribers or services is especially harmful to bandwidth access systems based on xDSL cable, wherein remote diaphony or telediaphony (FEXT, Far End Crosstalk) causes the speed at which it is capable of transmitting data for each subscriber over a given distance to decrease when the number of subscribers which share the same cable pair increases. This effect can be significant, reducing coverage for a certain service up to 50% for average speeds of around 12 Mbps and up to 2500% in the case of speeds of 20 Mbps, whereupon the coverage radius is reduce from 1 km to 200 m.

The coding used by different carriers through the use of sets of complementary sequences is already envisaged in certain papers, such as that published by Hsiao-Hwa Chen et al. ["A Multicarrier CDMA Architecture Based on Orthogonal Complementary Codes for New Generations of Wideband Wireless Communications", IEEE Communications Magazine, Oct. 2001, pp. 126-135].

Another approximation to the same solution is that proposed by Zao Ying et al. in ["Complex Orthogonal Spreading Sequences Using Mutually Orthogonal Complementary Sets", MILKON International Conference, 22-24 May 2006, pp. 622-625]. This paper envisages the use of complementary sequences modified in such a manner that four phases per sequence and carrier are used. Both methods are identical except for small modifications with regard to the sequences used.

Finally, reference must be made to the paper by Shu-Ming Tseng ("Asynchronous Multicarrier DS-CDMA Using Mutually Orthogonal Complementary Sets of Sequences", IEEE Trans. On Comm, Vol. 48, No. 1, January 2000, pp. 53-59], which repeats the same modulation and demodulation processes as those envisaged in the other papers, but with slight modifications.

Additionally, one of the main drawbacks of pulse compression-based detection systems such as RADAR and SONAR is the need to disable the reception stages during the time in which the compressed signal is transmitted, known as "blind time." If said stages are not disabled they become saturated, making it impossible to correctly receive reflected pulses that reach the receiver before the emitted signal has been fully transmitted. This effect limits both the minimum distance at which the pulsed radars can be measured and the maximum processing gain which can be obtained on compressing the signal. In order to avoid this, a typical solution consists of adding a different signal reception transducer having sufficient directionality to avoid saturation of the reception stages during transmission.

From all of the above we can infer the need for a coding technique that will allow, on one hand, efficient and simple transmission of information (compression/coding process) and, on the other, reduction of the destructive effects due to the phase differences between received signals, to the Doppler and "Clutter" effect and eliminate "blind time" in RADAR and SONAR systems.

Evident applications include mobile telephony, optimisation of RADAR or SONAR systems and the generation of medical images or spectral analysis, among others.

The existence of references, patents or utility models having identical or similar characteristics to those preconised herein is not known.

## DESCRIPTION OF THE INVENTION

The invention to which this description refers is based on the use of sets of N complementary sequences using up to N different orthogonal channels. Complementary is understood to mean that the sum of their autocorrelations results in a Krönecker delta.

Additionally, the value of N also coincides with the number of sets (A, B, C,...) of N complementary sequences which are orthogonal therebetween (A1 to AN, B1 to BN, C1 to CN, etc.).

Orthogonal is understood to mean that the sum of the crossed correlations of the complementary sequences of each set is zero.

These are the two properties used in this patent to obtain the desired results. In the specific case of orthogonal sequence pairs (N=2), they are referred to as Golay sequences in honour of their discoverer.

The main property of the sequences used herein is that they have an ideal autocorrelation characteristic, i.e. they correspond to a perfect Krönecker delta without side-lobes and null mutual crossed correlation between families within a set of orthogonal sequences.

In order to correctly implement the result, the system is composed of two well differentiated blocks:

    a. the transmission coding system; and
    b. the reception decoding system.

And the method is the following:

The control signal activates the code generator, which generates N simultaneous codes. Each code or element of the set of codes is transmitted by means of a quadrature modulator using different frequencies for each code (f1 to fN). For each frequency, at least one of the codes of the set is sent in-phase and the same code is sent with a changed sign in quadrature. The output of each modulator corresponds to a complex signal modulated at the corresponding intermediate frequency. Said outputs are added and raised to the transmission frequency using a frequency converter, amplifying the signal for transmission to the medium using a transducer adapted to said medium.

The decoder apparatus acts upon the signal received by means of a transducer adapted to the medium, lowering the frequency thereof using a frequency converter which lowers the signals to intermediate frequency so that these can be processed by each of the quadrature demodulator blocks. In-phase and in-quadrature outputs are filtered by a low-pass filter to extract the baseband components, said signals *being* correlated in the correlator blocks *and* the outputs of which added by means of adders, obtaining the real and imaginary components, respectively, which allows measurement not only of the amplitude of the sign received but also the phase in which it arrives at the receiver.

The correct use of this method allows the signal received (real and imaginary part) to be immune to the Doppler effect and to the phase difference with which the different signals or echoes received arrive, as well as reducing the "Clutter" effect. At the same time, said properties allow elimination of "blind time" in RADAR and SONAR systems.

Additionally, by applying the property of the orthogonal sets, using different sets or orthogonal sequences we can achieve the intercorrelation of other detection systems (radars, sonars, etc.) and, therefore, non-interference therebetween even if they are located in close proximity o each other or use the same transmission frequencies.

**BRIEF DESCRIPTION OF THE DRAWINGS**

In order to help better understand the invention, three sheets of drawings are provided wherein the following is represented:

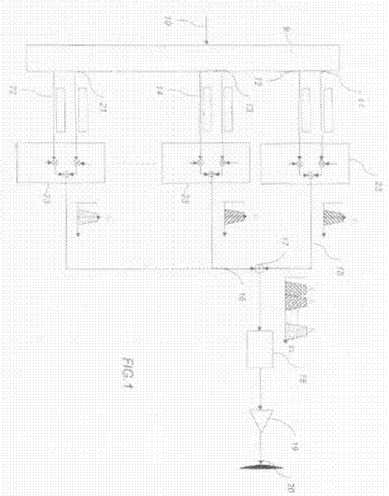

    Figure 1 shows the block diagram of a coding system for a single transmitter that uses N codes and N simultaneous frequencies. All the generation blocks and quadrature modulation which are repeated for the N codes are identical, except for the sequences used and the frequencies at which they are modulated.

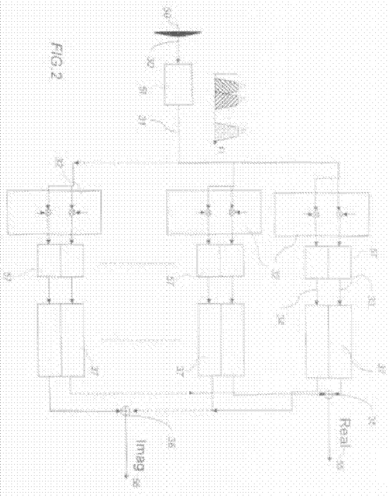

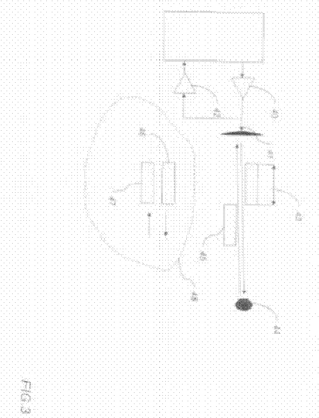

Figure 2 shows the block diagram for a single receiver with N codes which are independently transmitted and received. All the quadrature demodulation, filtration and correlation blocks which are repeated for the N codes are identical, except for the sequences used and the frequencies at which they demodulate. Figure 3 shows a block diagram representing the parameters corresponding to the suppression of "blind times."

**PREFERRED EMBODIMENT OF THE INVENTION**

The preconised invention comprises two independent sets of claims for a single unit result.

-    On one hand, an apparatus is claimed.
-    On the other, the method of use of said apparatus.

In order to implement said method, an apparatus with dual function is required, one for coding and the other for decoding the signals.

The method uses sets of N complementary sequences. Complementary is understood to mean that the sum of their autocorrelations results in a Krönecker delta.

Additionally, the value of N also coincides with the number of sets of complementary sequences which are orthogonal therebetween.

Orthogonal is understood to mean that the sum of the crossed correlation of the complementary sequences of each set is zero.

These are the two properties used in this patent to obtain the desired results. In the specific case of pairs (N=2) of orthogonal sequences, these are referred to as Golay sequences in honour of their discoverer.

The apparatus, defined as a communication system, is composed of two main blocks:

    A code and a decoder.

The coding system is in charge of generating and transmitting a set of complementary sequences to control signal intervals which can, evidently, be data pending transmission. The decoder, on the contrary, is in charge of correlating the signals received with the same set of complementary sequences used in the transmission and adding the results to obtain the original information.

The main property of the sequences used herein is their ideal autocorrelation characteristic, i.e. corresponding to a perfect Krönecker delta without side-lobes and null mutual crossed correlation between families within a set of orthogonal sequences, in such a manner that they fulfil:

$$\phi_{11}[n]+\phi_{22}[n]+...+\phi_{MM}[n]=\sum_{i=1}^{M}\phi_{ii}[n]=\begin{cases} MN & ,n=0 \\ 0 & ,n\neq 0 \end{cases}$$

$$\sum_{i=1}^{M}\Phi_{ii}(\omega)=cte \quad,\forall\omega \quad /\Phi_{ii}(\omega)=\Omega_{i}(\omega)\Omega_{i}^{*}(\omega)$$

$$\sum_{i=1}^{M}A_{i}(\omega)B_{i}^{*}(\omega)=0 \quad,\forall\omega \quad /A\neq B$$

Being $\phi ii$ the individual autocorrelations of each of the chosen M complementary sequences, of length N, and $\Phi$ and $\Omega_i$ the frequency response of the autocorrelation and complementary sequence i of the family $\Omega$ within the set of orthogonal sequences of length N within the bandwidth used and * the conjugated operator.

Such sequences are generated as of the so-called 2, 10 and 26 bit basic kernels known to date (the complementary sequence family generation rules are discussed in the article titled "Complementary Sets of Sequences" by C.C. Tseng and C.L. Liu, published in IEEE Trans. Inform. Theory, Vol. IT-18, no. 5, pp. 644-651, September 1972).

In order to understand the technique and according to the block diagram of the process (figures 1 and 2), we observe the following:

The coding block schematically represented in figure 1 works in the following manner:

The information to be transmitted or control signal *(10),* the bandwidth of which is B, activates the code generator *(9)* in such a manner that the signal is coded by means of N complementary sequences of a set of complementary sequences of N elements.

The outputs in fact correspond to the convolution of the control signal with each of the sequences generated by the code generator *(9)* and are converted into *(11), (13)... (21).*

Likewise, for each frequency at least one of the codes of the set (A1), (A2),... (AN) is sent in-phase and the same code with a changed sign is sent in quadrature (-A1), (-A"),... (-AN), which corresponds to the signals in *(12), (14)... (22)* and which correspond to the signals in *(12), (14)... (22)* and which correspond to the convolution of the same signal with each of the aforementioned sequences with changed signs.

The previous 2N signals are quadrature modulated by means of the modulator blocks *(23)* using N intermediate frequencies, $f_1$ to $f_N$, resulting in *(15), (16)... (1X).* These modulated signals are added in *17* and the generated set is raised to the transmission frequency using a frequency converter or "upconverter" *(18)* and amplified using an amplifier *(19)* to send it to the medium with the help of the transducer *(20).*

Evidently, the entire process, from modulation to amplification, can also be carried out by means of direct conversion.

The number of N bands will depend on the size of the set of complementary sequences used and the number of systems or services we wish to orthogonalise if necessary.

With regard to the decoding block schematically represented in figure 2, it works in the following manner:

It is a detection or communication system shared by N apparatuses. A set of complementary sequences of a family of orthogonal sequences is assigned to each unit, allowing these to be independent and operate in close proximity to each other without mutual interference.

The process starts by converting the frequency of the signal *(30)* received by means of the transducer *(50)* using the "downconverter" block *(51),* thereby obtaining the composite signal *(31)* in intermediate frequency (FI).

As of this point, each of the flows transmitted in each of the N carrier frequencies is demodulated, obtaining 2N bandbase signals by means of the quadrature demodulator blocks *(32).*

Each outgoing signal from each block is filtered by a low-pass filter *(57)* to eliminate out-of-band frequencies, obtaining the signals *(33), (34)... (3N).* These signals are correlated by means of the correlator *(37)* by the stored copies corresponding to the sequences transmitted from the selected transmitted set.

The sum *(35)* of the signals *(33)* correlated in an equivalent phase allow us to obtain the information we will call *Real (55)* and the sum *(35)* of the signals *(34)* correlated with an equivalent quadrature allow us to obtain the information we will *call Imag (56).*

Therefore, the signal received will be equivalent to the complex signal:

$$Rx=Real+j\cdot Imag$$

With the important characteristic that said complex signal allows us to obtain information relative to the phase and module with which the different signals received with respect to the transmitter arrive, as well as information relative to the Doppler displacement suffered.

By way of specific application, given that one of the greatest problems of the pulse compression detection systems such as RADAR and SONAR is the need to disable the reception stages during the period in which the compressed signal is transmitted, which is called "blind time", if this is not done said stages become saturated and it is impossible to correctly receive pulses reflected by the objects that arrive before signal emission is completed.

This effect limits both the minimum distance at which the pulsed radars can be measured, such as the maximum processing gain that can be obtained by compressing the signal. In order to avoid this, a typical solution consists of adding a different reception transducer having sufficient directionality to avoid saturation of the stages during transmission.

Figure 3 schematically represents this functionality, where **(40)** is the compressed signal, **(42)** the reception stages and **(43)** what we call "blind time."

And therefore, by means of the previously described method, given that orthogonalisation is independent of the phase and the module of the signals received and that this is fulfilled for any separation value greater than or equal to half of the chirp intervals, it is possible to transmit **(46)** the pulses reflected **(45)** on the objects **(44)** and receive **(47)** the signal simultaneously **(48),** using only a transducer or antenna.

The advantage offered by the method revealed herein is that, given that orthogonalisation is independent of the phase and module of the signals received and is true for any separation value greater than or equal to half of the chirp intervals, it is possible to transmit and receive the signal at the same time, using a single transducer or antenna, therefore eliminating "blind time" between measurements.

This is the only known method to date which allows "blind time" to be annulled in pulse compression-based systems.

In conclusion, it can be affirmed that this technique has different advantages: on one hand, eliminating dependence on the Doppler effect and the phase with which the different detected signals are detected, having to reduce the "Clutter" effect, possibility of creating independent or orthogonal channels in time for the different units that use the same frequency band while eliminating "blind time" in detection systems.

Therefore, the invention being described constitutes a powerful coding and decoding system which substantially improves the current pulse compression techniques for communication, detection, measurement or medical image applications.

## Claims

1. Method and apparatus for obtaining immunity to the phase difference and the Doppler effect in detection and communication systems, **characterised in that** the method essentially consists of the fact that the information is coded by means of different channels of families of complementary sequence sets having null crossed correlation between subsets of said families, and where the method uses sets of N complementary sequences, understanding by complementary those wherein the sum of their autocorrelations results in a Krönecker delta and wherein the value of N also coincides with the number of complementary sequence sets which are orthogonal therebetween, i.e. that the sum of the crossed correlations of the complementary sequences of each set is zero, and wherein the emitted signal consists of the quadrature emission of each of the in-phase codes and the same codes with a changed sign in quadrature.

2. Method and apparatus for obtaining immunity to the phase difference and the Doppler effect in detection and communication systems, **characterised in that** the apparatus essentially consists of two main elements, a transmission coder and a reception decoder. The coder works in such a manner that the information to be transmitted or control signal **(10),** the bandwidth of which is B, activates the code generator **(9)** in such a manner that the signal is coded by means of N complementary sequences of a set of complementary sequences of N elements and the outputs in fact correspond to the convolution of the control signal with each of the sequences generated by the code generator **(9)** and are converted into **(11), (13)... (21),** in such a manner that at least one of the codes of the set in phase **(A1), (A2),... (AN)** is sent for each frequency, and the same code with its sign changed in quadrature **(-A1), (A"),... (-AN)** which corresponds to the signals in **(12), (14)... (22)** and which correspond to the convolution of the same signal with each of the previous sequences with their sign changed.

The previous 2N signals are quadrature modulated by means of the modulator blocks **(23)** using N intermediate frequencies, $f_1$ to $f_N$, resulting in **(15), (16)... (1X)**. These modulated signals are added in **17** and the generated set is raised to the transmission frequency using a frequency converter or "upconverter" **(18)** and amplified by means of an amplifier **(19)** to send it to the medium with the help of the transducer **(20)**.

The decoder starts its process by converting the frequency of the signal **(30)** received by the transducer **(50)** using the "downconverter" block **(51),** thereby obtaining the composite signal **(31)** in the intermediate frequency (FI), and subsequently, each of the flows transmitted in each of the N carrier frequencies is demodulated, obtaining 2N bandbase signals by means of the quadrature demodulator blocks **(32),** wherein each output signal from each block is filtered by a low-pass filter **(57)** to eliminate the out-of-band frequencies, obtaining signals **(33), (34)... (3N)**. These signals are correlated by means of the correlator **(37)** by the stored copies corresponding to the transmitted sequences of the selected set during transmission.

The sum **(35)** of the signals **(33)** correlated with an equivalent phase allow us to obtain information which we will call *Real* **(55)** and the sum **(35)** of the signals **(34)** correlated with an equivalent quadrature allow us to obtain information which we will call *Imag* **(56),** in such a manner that the signal received will be equivalent to the complex signal

**Rx=***Real+j·Imag*

3. Method and apparatus for obtaining immunity to the phase difference and the Doppler effect in detection and communication systems, according to the preceding claims and **characterised in that** the method can be implemented by using N simultaneous transducers instead of N frequencies.

4. Method and apparatus for obtaining immunity to the phase difference and the Doppler effect in detection and communications systems, according to the preceding claims and **characterised in that** the coding and decoding method implemented using this apparatus allows simultaneous transmission and reception between different adjacent apparatuses without mutual interference.

5. Method and apparatus for obtaining immunity to the phase difference and the Doppler effect in detection and communications systems, according to the preceding claims and **characterised in that**, if orthogonalisation is independent of the phase and module of the signals received and it is also used for any separation value greater than or equal to half of the chirp intervals, it is possible to transmit and receive the signal at the same time, using a single transducer or antenna and therefore eliminating "blind time" between measurements.

FIG. 1

FIG. 2

FIG. 3

# INTERNATIONAL SEARCH REPORT

| International application No. |
|---|
| PCT/ ES 2009/070581 |

### A. CLASSIFICATION OF SUBJECT MATTER

see extra sheet

According to International Patent Classification (IPC) or to both national classification and IPC

### B. FIELDS SEARCHED

Minimum documentation searched (classification system followed by classification symbols)

H04J,H04B,H04L

Documentation searched other than minimum documentation to the extent that such documents are included in the fields searched

Electronic data base consulted during the international search (name of data base and, where practicable, search terms used)

INVENES,EPODOC,XPI3E,XPIEE

### C. DOCUMENTS CONSIDERED TO BE RELEVANT

| Category* | Citation of document, with indication, where appropriate, of the relevant passages | Relevant to claim No. |
|---|---|---|
| A | ES 2255390 A1 (DIAZ FUENTE, VICENTE), 16.06.2006 Page 3, line 10- page 4, line 30 Page 6, lines 30-64; figure 1. | 1-5 |
| A | Shu-Ming Tseng; Bell, M.R. , "Asynchronous multicarrier DS-CDMA using mutually orthogonal complementary sets of sequences," IEEE Transactions on Communications, vol.48, no.1, pp.53-59, January 2000. doi: 10.1109/26.818873 URL: http://ieeexplore.ieee.org/stamp/stamp.jsp?tp=&arnumber=818873&isnumber=17738 Apartados II and III. figures 1 a 3. | 1-5 |

☒ Further documents are listed in the continuation of Box C.        ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 05 May 2010        (05.05.2010) | **(07/05/2010)** |
| Name and mailing address of the ISA/ O.E.P.M. Paseo de la Castellana, 75 28071 Madrid, España. Facsimile No.   34 91 3495304 | Authorized officer J. Cotillas Castellano Telephone No. +34 91 349 54 10 |

Form PCT/ISA/210 (second sheet) (July 2009)

**INTERNATIONAL SEARCH REPORT**

| International application No. |
| --- |
| PCT/ES 2009/070581 |

| C (continuation). | DOCUMENTS CONSIDERED TO BE RELEVANT | |
| --- | --- | --- |
| Category* | Citation of documents, with indication, where appropriate, of the relevant passages | Relevant to claim No. |
| A | Searle, S. et al, "The use of complementary sets in MIMO radar," , 2008 42nd Asilomar Conference on Signals, Systems and Computers, vol., no., pp.510-514, 26-29 Oct. 2008 doi: 10.1109/ACSSC.2008.5074457 URL: http://ieeexplore.ieee.org/stamp/stamp.jsp?tp=&arnumber=5074457&isnumber=5074342 Apartados II-IV. | 1-5 |
| A | Magaña, M.E. et al, "Design of an MC-CDMA System That Uses Complete Complementary Orthogonal Spreading Codes", IEEE Transactions on Vehicular Technology, vol.56, no.5, pp.2976-2989, Sept. 2007 doi: 10.1109/TVT.2007.900359 URL: http://ieeexplore.ieee.org/stamp/stamp.jsp?tp=&arnumber=4305522&isnumber=4305470 Apartados II-IV and apéndice C. figures12-17. | 1-5 |
| A | Tseng, C.C. et al, "Complementary sets of sequences," IEEE Transactions on Information Theory, vol.18, no.5, pp. 644- 652, Sept 1972. URL: http://ieeexplore.ieee.org/stamp/stamp.jsp?tp=&arnumber=1054860&isnumber=22665 the whole document. | 1-5 |

Form PCT/ISA/210 (continuation of second sheet) (July 2009)

| INTERNATIONAL SEARCH REPORT | International application No. |
|---|---|
| Information on patent family members | PCT/ ES 2009/070581 |

| Patent document cited in the search report | Publication date | Patent family member(s) | Publication date |
|---|---|---|---|
| ES 2255390 AB | 16.06.2006 | WO 2005122513 A | 22.12.2005 |
| | | CN 1961553 A | 09.05.2007 |
| | | EP 1783976 A | 09.05.2007 |
| | | EP 20050745540 | 29.04.2005 |
| | | JP 2008501264 T | 17.01.2008 |
| | | US 2008112501 A | 15.05.2008 |

Form PCT/ISA/210 (patent family annex) (July 2009)

**INTERNATIONAL SEARCH REPORT**

International application No.

PCT/ ES 2009/070581

CLASSIFICATION OF SUBJECT MATTER

*H04J 13/04* (2006.01)
*H04J 11/00* (2006.01)
*H04B 1/707* (2006.01)

Form PCT/ISA/210 (extra sheeet) (July 2009)

14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4633185 A
- US 4309703 A
- US 5440311 A
- US 5151702 A
- US 4353067 A
- US 5047 A

- US 784 A
- ES 2008000734 W
- US 5376939 A
- US 7439906 B
- US 5414428 A
- US 3945010 A

**Non-patent literature cited in the description**

- **J. Watkins et al.** A Binary Sequence of Period 64 with Better Autocorrelation Properties Than Barker Sequence of Period 13. *JPL, TDA Progress Report,* April 1985
- **Hsiao-Hwa Chen et al.** A Multicarrier CDMA Architecture Based on Orthogonal Complementary Codes for New Generations of Wideband Wireless Communications. *IEEE Communications Magazine,* October 2001, 126-135

- **Zao Ying et al.** Complex Orthogonal Spreading Sequences Using Mutually Orthogonal Complementary Sets. *MILKON International Conference,* 22 May 2006, 622-625
- **Shu-Ming Tseng.** Asynchronous Multicarrier DS-CDMA Using Mutually Orthogonal Complementary Sets of Sequences. *IEEE Trans. On Comm,* January 2000, vol. 48 (1), 53-59
- **C.C. Tseng ; C.L. Liu.** Complementary Sets of Sequences. *IEEE Trans. Inform. Theory,* September 1972, vol. IT-18 (5), 644-651